# EUROPÄISCHE PATENTSCHRIFT

(11) **EP 2 522 878 B1**
(45) Veröffentlichungstag und Bekanntmachung des Hinweises auf die Patenterteilung: **18.02.2015**
(21) Anmeldenummer: 12002079.7
(22) Anmeldetag: 23.03.2012
(51) Int. Cl.: F16F 13/14

(54) **Buchse und Verfahren zum Fertigen von Buchsen**
Socket and method for manufacturing sockets
Douille et procédé de fabrication de douilles

(30) Priorität: 11.05.2011 DE 102011101225
(43) Veröffentlichungstag der Anmeldung: 14.11.2012
(73) Patentinhaber: TrelleborgVibracoustic GmbH, 64293 Darmstadt (DE)
(72) Erfinder: Werner, Philipp, Dr., 21339 Lüneburg (DE); Sell, Hendrik, Dr., 22607 Hamburg (DE)
(74) Vertreter: Flügel Preissner Kastel Schober

(56) Entgegenhaltungen:
- EP-A1- 1 707 842
- DE-A1-102007 038 493
- US-A1- 2006 006 592
- US-A1- 2009 200 719

## Beschreibung

Die Erfindung betrifft eine Buchse, umfassend ein Kernrohr, ein Hüllrohr und einen Elastomerkörper, welcher zwischen dem Kernrohr und dem Hüllrohr angeordnet ist, wobei das Kernrohr relativ zu dem Hüllrohr beweglich ist und wobei ein Fensterrohr vorgesehen ist, das mit dem Elastomerkörper verbunden ist und dieses umfänglich umgibt. Weiterhin betrifft die Erfindung ein Verfahren zur Herstellung einer derartigen Buchse.

Eine Buchse der eingangs genannten Art ist aus der US 2006/006592 A1 sowie der US 2009/2007192 A1 bekannt. Die bekannten Buchsen weisen ein Kernrohr auf, an dessen Außenumfang ein Elastomerkörper anvulkanisiert ist. In den Elastomerkörper ist ein metallisches Fensterrohr einvulkanisiert. Die Außenbuchse, die ebenfalls aus Metall besteht, ist an ihrer Innenseite mit einer Gummibeschichtung versehen. Das Gummimetallteil wird in die Außenbuchse eingeführt, wodurch eine elastische und flüssigkeitsdichte Verbindung geschaffen wird.

Um Fluide innnerhalb der Buchsen einzuschließen, ist es weiterhin bekannt, dass das Hüllrohr derart verformt wird, dass es das Fensterrohr an den Stirnflächen der Buchse teilweise umgreift. Konkret kann das Hüllrohr gebördelt, rolliert oder geclincht werden. Dabei ist üblicherweise zwischen der äußeren Umfangsfläche des Fensterrohrs und der inneren Fläche des Hüllrohrs ein Dichtelement vorgesehen, um ein Austreten des Fluids zu verhindern. Die Herstellung derartiger Buchsen ist relativ aufwendig, da die Außenbuchse in einem separaten Herstellungsschritt mit einer inneren Elastomerbeschichtung versehen werden muss oder eine mechanische Bearbeitung des Hüllrohresnotwendig ist.

Ausgehend hiervon liegt hier die Erfindung die Aufgabe zugrunde, eine Buchse der eingangs genannten Art vorzuschlagen, die sich durch eine einfache Herstellung und eine hohe Betriebstauglichkeit auszeichnet.

Erfindungsgemäß wird die vorstehende Aufgabe durch eine Buchse gemäß Patentanspruch 1 gelöst.

Die erfindungsgemäße Buchse umfasst ein Kernrohr, ein Hüllrohr und einen Elastomerkörper, welcher zwischen dem Kernrohr und dem Hüllrohr angeordnet ist, wobei das Kernrohr relativ zu dem Hüllrohr beweglich ist und wobei ein Fensterrohr vorgesehen ist, das mit dem Elastomerkörper verbunden ist und dieses umfänglich umgibt. Erfindungsgemäß besteht das Fensterrohr und das Hüllrohr aus Kunststoff und sind mittels Reibschweißen, Ultraschallschweißen oder Laserschweißen stoffschlüssig miteinander verbunden.

Überraschend ist erkannt worden, dass eine stoffschlüssige Verbindung des Hüllrohres mit dem in dem Elastomerkörper einvulkanisierten Fensterrohr weitere Dichtelemente überflüssig macht. Hierdurch ist die Fertigung der erfindungsgemäßen Buchse vereinfacht. Des Weiteren kann auch auf ein aufwendiges Bördelverfahren der Außenbuchse verzichtet werden. Die stoffschlüssige Verbindung zwischen dem Hüllrohr und dem Fensterrohr ist dabei ausreichend stabil, um den im Einsatz auftretenden Bewegungen des Hüllrohrs relativ zum Kernrohr Stand zu haltern.

Die erfindungsgemäße Buchse zeichnet sich durch eine hohe Betriebstauglichkeit aus, da die stoffschlüssige Fügestelle auch bei hohen Belastungen, insbesondere bei Kraftfahrzeugen in Lenkeinrichtungen oder an Hinterachsträgern, intakt bleibt. Insoweit ist eine Buchse angegeben, welche nach problemloser Fertigung eine hohe Betriebstauglichkeit aufweist. Die stoffschlüsssige Verbindung kann durch Reibschweißen, Ultraschallschweißen oder Laserschweißen erfolgen. Da sowohl das Hüllrohr als auch das Fensterrohr aus einem Kunststoff bestehen, weist die erfindungsgemäße Buchse ein geringes Gewicht auf.

Bei einer vorteilhaften Ausgestaltung ist das Hüllrohr aus einem laserlichttransparentem Kunststoff gefertigt und besteht das Fensterrohr aus einem Kunststoff, in welchem ein Absorptionsmittel für das Laserlicht aufgenommen ist. Ein von außen einwirkender Laserstrahl kann das Hüllrohr passieren und das Fensterrohr lokal erweichen, indem an dem Absorptionsmittel das Laserlicht in Wärme umgewandelt wird. An einer Fügestelle zwischen dem Fensterrohr und dem Hüllrohr können die erweichten Kunststoffe durchfließen und/oder durch Diffusion eine stoffschlüssige Verbindung herstellen.

Vorteihaft weist das Fensterrohr zwei Ringe auf, die durch Stege miteinander verbunden sind.

In vorteilhafter Ausgestaltung weist die Buchse mindestens eine Kammer auf, in welcher ein Fluid aufgenommen ist. In der Regel werden zwei Kammern ausgebildet, die durch einen Kanal verbunden sind. Ein Fluid verleiht der Buchse tilgende oder dämpfende Eigenschaften.

In vorteilhafter Ausgestaltung sind an der Buchse Anschläge vorgesehen, welche einen Freiweg zwischen dem Kernrohr und dem Hüllrohr begrenzen. Diese Anschläge können radial außen vorgesehen sein. Sie können aber auch im Inneren oder radial innen und radial außen vorliegen. Hierdurch können zu große Auslenkungen des Kernrohrs relativ zu dem Hüllrohr verhindert werden.

Ferner umfasst die vorliegende Erfindung ein Verfahren zur Herstellung einer Buchse der eingangs genannten Art, dass dadurch gekennzeichnet ist, dass das Hüllrohr zuerst über das Fensterrohr gestülpt wird, und dann das Hüllrohr und das Fensterrohr mittels Reibschweißen, Ultraschallschweißen oder Laserschweißen stoffschlüssig miteinander verbunden werden.

Nachfolgend wird die Erfindung anhand von Ausführungsbeispielen näher erläutert, die in der Zeichnung in schematischer Weise dargestellt sind. In der Zeichnung zeigen:
- Fig. 1: in einer Schnittzeichnung eine Buchse des Stands der Technik, bei welcher das Hüllrohr an den Stirnflächen der Buchse zur Herstellung eines Formschlusses umgebördelt ist,
- Fig. 1a: in einer Schnittzeichnung eine Buchse des Stands der Technik, bei welcher das Hüllrohr an den Stirnflächen der Buchse zur Herstellung eines Formschlusses umgebördelt ist, wobei Anschläge vorgesehen sind,
- Fig. 2: in einer Schnittzeichnung eine erfindungsgemäße Buchse ohne Dichtungen, bei welcher das Hüllrohr stoffschlüssig mit einem Fensterrohr verbunden ist, und
- Fig. 2a: in einer Schnittzeichnung eine weitere erfindungsgemäße Buchse ohne Dichtungen, bei welcher das Hüllrohr stoffschlüssig mit einem Fensterrohr verbunden ist, wobei Anschläge vorgesehen sind.

### Ausführung der Erfindung

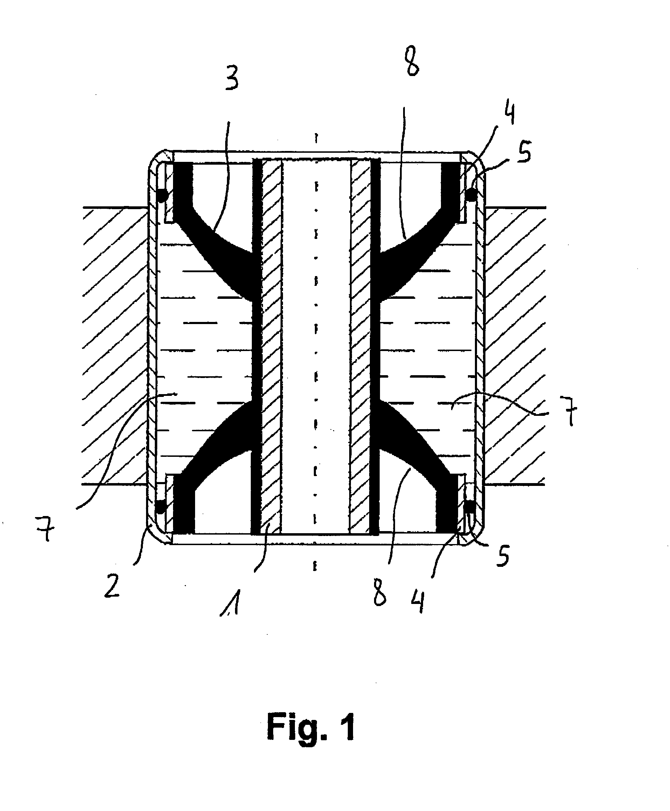

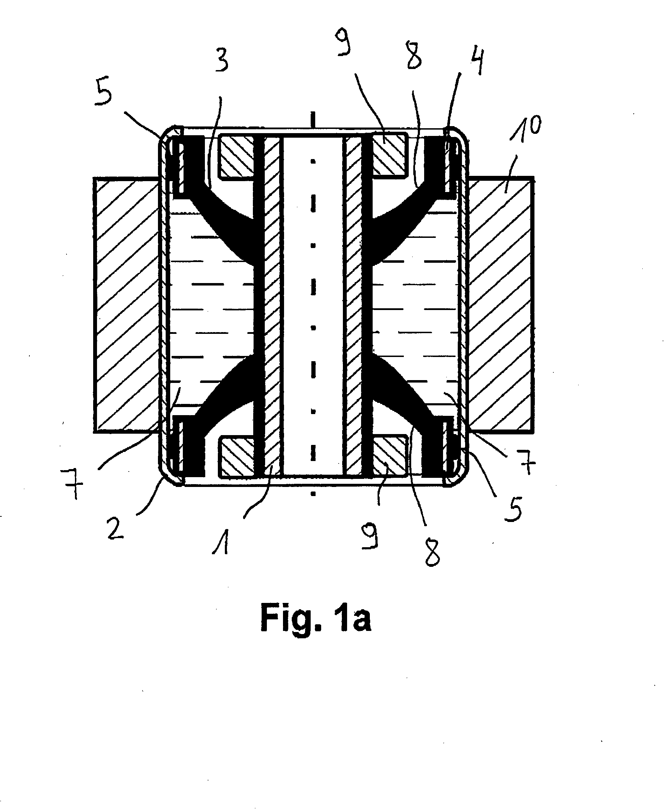

Fig. 1 zeigt eine Buchse des Stands der Technik, welche ein Kernrohr 1, ein Hüllrohr 2 und ein Elastomer 3 umfasst, welches zwischen dem Kernrohr 1 und dem Hüllrohr 2 angeordnet ist, wobei das Kernrohr 1 relativ zum Hüllrohr 2 beweglich ist und wobei das Hüllrohr 2 mit einem Verbindungsmittel 4 verbunden ist. Das Hüllrohr 2 ist an den Stirnflächen der Buchse umgebördelt und nimmt daher das Kernrohr 1, das Elastomer 3 und das Verbindungsmittel 4 formschlüssig auf. Zwischen dem Verbindungsmittel 4 und dem Hüllrohr 2 sind Dichtelemente 5 aufgenommen.

Fig. 1 a zeigt eine Buchse des Stands der Technik, welche ein Kernrohr 1, ein Hüllrohr 2 und ein Elastomers 3 umfasst, welches zwischen dem Kernrohr 1 und dem Hüllrohr 2 angeordnet ist, wobei das Kernrohr 1 relativ zum Hüllrohr 2 beweglich ist und wobei das Hüllrohr 2 mit einem Verbindungsmittel 4 verbunden ist. Das Hüllrohr 2 ist an den Stirnflächen der Buchse umgebördelt und nimmt daher das Kernrohr 1, das Elastomer 3 und das Verbindungsmittel 4 formschlüssig auf. Zwischen dem Verbindungsmittel 4 und dem Hüllrohr 2 sind Dichtelemente 5 aufgenommen.

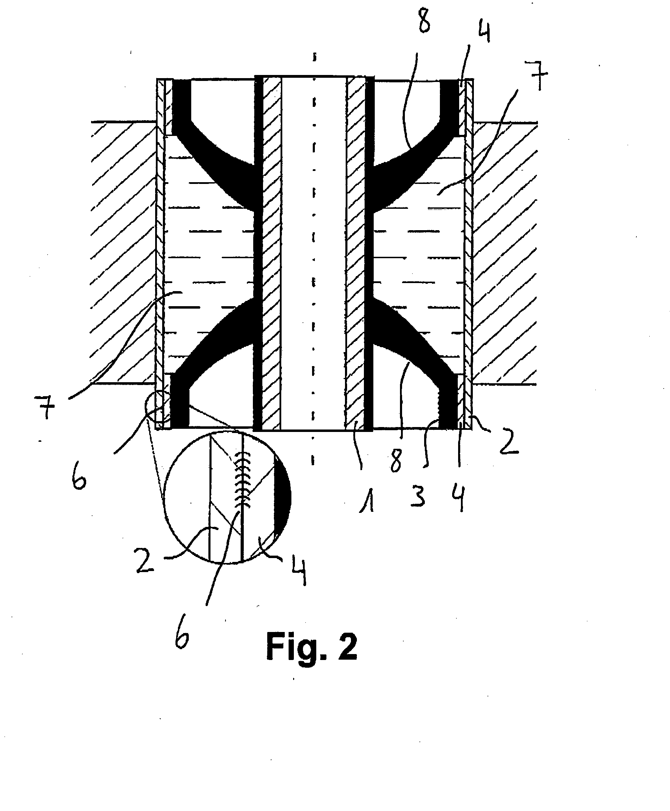

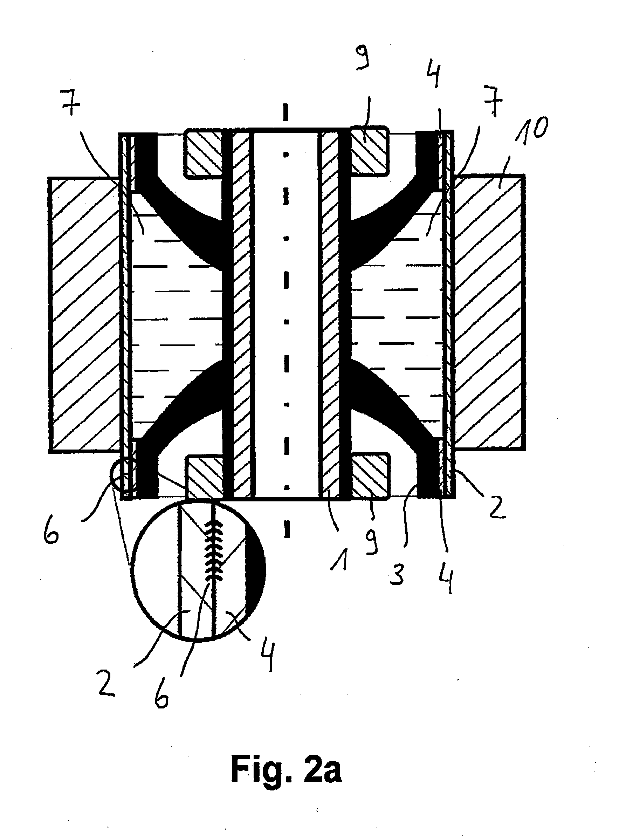

Fig. 2 zeigt eine erfindungsgemäße Buchse, umfassend ein Kernrohr 1, ein Hüllrohr 2 und ein Elastomer 3, welches zwischen dem Kernrohr 1 und dem Hüllrohr 2 angeordnet ist, wobei das Kernrohr 1 relativ zum Hüllrohr 2 beweglich ist und wobei das Hüllrohr 2 mit einem Verbindungsmittel 4 verbunden ist. Das Hüllrohr 2 ist stoffschlüssig mit dem Verbindungsmittel 4 verbunden.

Daher ist in der Buchse kein Dichtelement vorhanden, welches zwischen dem Verbindungsmittel 4 und dem Hüllrohr 2 angeordnet ist. Die Buchse weist keine formschlüssig verbundenen Komponenten auf. Das Kernrohr 1 und das Hüllrohr 2 sind unter Deformierung des Elastomers 3 relativ zueinander beweglich angeordnet.

Das Verbindungsmittel 4 und das Hüllrohr 2 weisen Kunststoffe auf. Konkret sind sowohl das Verbindungsmittel 4 als auch das Hüllrohr 2 aus einem Kunststoff gefertigt. Die Grundpolymere, aber auch die Compounds, nämlich die Polymere nebst Verstärkungen und Additiven, des Hüllrohrs 2 und des Verbindungsmittels 4 können identisch sein.

Das Hüllrohr 2 ist aus einem laserlichttransparenten Kunststoff gefertigt, wobei das Verbindungsmittel 4 aus einem Kunststoff gefertigt ist, in welchem Absorptionsmittel für das Laserlicht aufgenommen sind.

An den Absorptionsmitteln wurde durch von außen eingestrahltes Laserlicht an einer Fügestelle 6 Wärme erzeugt. An der Fügestelle 6 sind die Kunststoffe des Hüllrohrs 2 und des Verbindungsmittels 4 ineinandergeflossen. Die Fügestelle 6 kann auch durch andere Schweißverfahren erzeugt worden sein.

Das Verbindungsmittel 4 ist als Fensterrohr ausgebildet, welches am Elastomer 3 angebunden ist und dieses umgibt.

Die Buchse weist mindestens eine Kammer 7 auf, in welcher ein Fluid aufgenommen ist. Die Kammer 7 wird vom Elastomer 3, vom Hüllrohr 2 sowie vom Verbindungmittel 4 begrenzt. Die Kammer 7 wird vom Elastomer 3, vom Hüllrohr 2, vom Verbindungmittel 4 und in manchen Fällen auch vom Kernrohrs 1 begrenzt, sofern das Kernrohr 1 im Bereich der Kammer 7 nicht vollständig mit Elastomer 3 überzogen ist.

Das Elastomer 3 weist in radialer Richtung abragende Ringabschnitte 8 auf, welche in das Verbindungsmittel 4 münden und mit diesem fluiddicht verbunden sind.

Die in Fig. 2 gezeigte Buchse ist durch ein Verfahren hergestellt, welches einen Schritt des stoffschlüssigen Verbindens des Hüllrohrs 2 mit einem Verbindungsmittel 4 der Buchse aufweist.

Konkret wurde das Hüllrohr 2 mit einem Fensterrohr durch Laserschweißen verbunden.

Es sind keine Dichtelemente, insbesondere keine elastomeren Dichtelemente, zwischen Hüllrohr 2 und Verbindungsmittel 4 vorgesehen.

Fig. 2a zeigt eine erfindungsgemäße Buchse, umfassend ein Kernrohr 1, ein Hüllrohr 2 und ein Elastomer 3, welches zwischen dem Kernrohr 1 und dem Hüllrohr 2 angeordnet ist, wobei das Kernrohr 1 relativ zum Hüllrohr 2 beweglich ist und wobei das Hüllrohr 2 mit einem Verbindungsmittel 4 verbunden ist. Das Hüllrohr 2 ist stoffschlüssig mit dem Verbindungsmittel 4 verbunden.

Daher ist in der Buchse kein Dichtelement vorhanden, welches zwischen dem Verbindungsmittel 4 und dem Hüllrohr 2 angeordnet ist. Die Buchse weist keine formschlüssig verbundenen Komponenten auf. Das Kernrohr 1 und das Hüllrohr 2 sind unter Deformierung des Elastomers 3 relativ zueinander beweglich angeordnet.

Das Verbindungsmittel 4 und das Hüllrohr 2 weisen Kunststoffe auf. Konkret sind sowohl das Verbindungsmittel 4 als auch das Hüllrohr 2 aus einem Kunststoff gefertigt. Die Grundpolymere, aber auch die Compounds, nämlich die Polymere nebst Verstärkungen und Additiven, des Hüllrohrs 2 und des Verbindungsmittels 4 können identisch sein.

Das Hüllrohr 2 ist aus einem laserlichttransparenten Kunststoff gefertigt, wobei das Verbindungsmittel 4 aus einem Kunststoff gefertigt ist, in welchem Absorptionsmittel für das Laserlicht aufgenommen sind.

An den Absorptionsmitteln wurde durch von außen eingestrahltes Laserlicht an einer Fügestelle 6 Wärme erzeugt. An der Fügestelle 6 sind die Kunststoffe des Hüllrohrs 2 und des Verbindungsmittels 4 ineinandergeflossen. Die Fügestelle 6 kann auch durch andere Schweißverfahren oder durch Verkleben erzeugt worden sein.

Das Verbindungsmittel 4 ist als Fensterrohr ausgebildet, welches am Elastomer 3 angebunden ist und dieses umgibt.

Die Buchse weist mindestens eine Kammer 7 auf, in welcher ein Fluid aufgenommen ist. Die Kammer 7 wird vom Elastomer 3, vom Hüllrohr 2 sowie vom Verbindungmittel 4 begrenzt. Die Kammer 7 wird vom Elastomer 3, vom Hüllrohr 2, vom Verbindungmittel 4 und in manchen Fällen auch vom Kernrohr 1 begrenzt, sofern das Kernrohr 1 im Bereich der Kammer 7 nicht vollständig mit Elastomer 3 überzogen ist.

Das Elastomer 3 weist in radialer Richtung abragende Ringabschnitte 8 auf, welche in das Verbindungsmittel 4 münden und mit diesem fluiddicht verbunden sind.

Die in Fig. 2a gezeigte Buchse ist durch ein Verfahren hergestellt, welches einen Schritt des stoffschlüssigen Verbindens des Hüllrohrs 2 mit einem Verbindungsmittel 4 der Buchse aufweist. Konkret wurde das Hüllrohr 2 mit einem Fensterrohr durch Laserschweißen verbunden.

Es sind keine Dichtelemente, insbesondere keine elastomeren Dichtelemente, zwischen Hüllrohr 2 und Verbindungsmittel 4 vorgesehen. Neben dem Elastomer 3 sind weitere Anschläge 9 vorgesehen, welche einen Freiweg zwischen Kernrohr 1 und Hüllrohr 2 begrenzen. Konkret sind die Anschläge 9 am Kernrohr 1 radial von diesem abragend angeordnet und liegen sich an axialen Enden des Kernrohrs 1 axial gegenüber.

Die Buchse lagert einen Lenker 10 gegen eine nicht dargestellte Karosserie eines Kraftfahrzeugs, welche mit dem Kernrohr 1 verbunden ist. Die hier beschriebene Buchse eignet sich zur Verwendung im Fahrwerk von Kraftfahrzeugen. Insbesondere eignet sich die hier beschriebene Buchse zur Verwendung als Hydrolager.

## Patentansprüche

1. Buchse, umfassend ein Kernrohr (1), ein Hüllrohr (2) und einen Elastomerkörper (3), welcher zwischen dem Kernrohr (1) und dem Hüllrohr (2) angeordnet ist, wobei das Kernrohr (1) relativ zum Hüllrohr (2) beweglich ist, und wobei ein Fensterrohr (4) vorgesehen ist, das mit dem Elastomerkörper (3) verbunden ist und dieses umfänglich umgibt, **dadurch gekennzeichnet, dass** das das Fensterrohr (4) und das Hüllrohr (2) aus Kunststoff bestehen und mittels Reibschweißen, Ultraschallschweißen oder Laserschweißen stoffschlüssig miteinander verbunden sind.

2. Buchse nach Anspruch 1, **dadurch gekennzeichnet, dass** das Hüllrohr (2) aus einem laserlichttransparenten Kunststoff gefertigt ist und das Fensterrohr (4) aus einem Kunststoff besteht, in welchem ein Absorptionsmittel für das Laserlicht aufgenommen ist.

3. Buchse nach einem der voranstehenden Ansprüche, **dadurch gekennzeichnet, dass** das Fensterrohr (4) zwei Ringe aufweist, die durch Stege miteinander verbunden sind.

4. Buchse nach einem der voranstehenden Ansprüche, **dadurch gekennzeichnet, dass** die Buchse mindestens eine Kammer (7) aufweist, in welcher ein Fluid aufgenommen ist.

5. Buchse nach einem der voranstehenden Ansprüche, **dadurch gekennzeichnet, dass** Anschläge (9) vorgesehen sind, welche einen Freiweg zwischen dem Kernrohr (1) und dem Hüllrohr (2) begrenzen.

6. Verfahren zur Herstellung einer Buchse nach einem der voranstehenden Ansprüche, **dadurch gekennzeichnet, dass** das Hüllrohr (2) zuerst über das Fensterrohr (4) gestülpt wird, und dann das Hüllrohr (2) und das Fensterrohr (4) mittels Reibschweißen, Ultraschallschweißen oder Laserschweißen stoffschlüssig miteinander verbunden werden.

## Claims

1. A bushing, comprising a core tube (1), a casing tube (2) and an elastomer body (3) disposed between the core tube (1) and the casing tube (2), the core tube (1) being movable relative to the casing tube (2), and a window tube (4) being provided which is connected to the elastomer body (3) and which surrounds it peripherally, **characterised in that** the window tube (4) and the casing tube (2) consist of plastic and are connected to each other in a substance-to-substance connection by friction welding, ultrasonic welding or laser welding.

2. The bushing according to claim 1, **characterised in that** the casing tube (2) is made from a laser light-transparent plastic and the window tube (4) consists of a plastic into which an absorbing agent for the laser light is incorporated.

3. The bushing according to any one of the preceding claims, **characterised in that** the window tube (4) comprises two rings interconnected by means of webs.

4. The bushing according to any one of the preceding claims, **characterised in that** the bushing comprises at least one chamber (7) in which a fluid is accommodated.

5. The bushing according to any one of the preceding claims, **characterised in that** stops (9) are provided which delimit a play between the core tube (1) and the casing tube (2).

6. A method for producing a bushing according to any one of the preceding claims, **characterised in that** the casing tube (2) is first put over the window tube (4), and the casing tube (2) and the window tube (4) are then connected to each other in a substance-to-substance connection by means of friction welding, ultrasonic welding or laser welding.

## Revendications

1. Douille, comprenant un tube central (1), un tube enveloppe (2) et un corps élastomère (3) qui est agencé entre le tube central (1) et le tube enveloppe (2), dans laquelle le tube central (1) est déplaçable par rapport au tube enveloppe (2), et dans laquelle il est prévu un tube à fenêtre (4) qui est relié au corps élastomère (3) et entoure celui-ci sur sa périphérie, **caractérisée en ce que** le tube à fenêtre (4) et le tube enveloppe (2) sont en matière plastique et sont reliés l'un à l'autre en coopération de matières au moyen d'un soudage à friction, d'un soudage à ultrasons ou d'un soudage au laser.

2. Douille selon la revendication 1, **caractérisée en ce que** le tube enveloppe (2) est fabriqué en une matière plastique transparente au rayonnement laser, et le tube à fenêtre (4) est en une matière plastique dans laquelle est reçu un moyen d'absorption pour le rayonnement laser.

3. Douille selon l'une des revendications précédentes, **caractérisée en ce que** le tube à fenêtre (4) comprend deux bagues qui sont reliées l'une à l'autre par des barrettes.

4. Douille selon l'une des revendications précédentes, **caractérisée en ce que** la douille comprend au moins une chambre (7) dans laquelle est reçu un fluide.

5. Douille selon l'une des revendications précédentes, **caractérisée en ce qu'**il est prévu des butées (9) qui limitent une course libre entre le tube central (1) et le tube enveloppe (2).

6. Procédé pour la réalisation d'une douille selon l'une des revendications précédentes, **caractérisée en ce que** le tube enveloppe (2) est tout d'abord enfilé par-dessus le tube à fenêtre (4), et ensuite le tube enveloppe (2) et le tube à fenêtre (4) sont reliés l'un à l'autre en coopération de matières au moyen d'un soudage à friction, d'un soudage aux ultrasons ou d'un soudage au laser.
